# EUROPÄISCHE PATENTSCHRIFT

(11) **EP 3 451 882 B1**
(45) Veröffentlichungstag und Bekanntmachung des Hinweises auf die Patenterteilung: **29.07.2020**
(21) Anmeldenummer: 17720813.9
(22) Anmeldetag: 03.05.2017
(51) Int. Cl.: A47J 41/00, A47G 19/22, B65D 81/38

(54) **DOPPELWANDIGES GEFÄSS ZUM AUFBEWAHREN EINER TRINKBAREN FLÜSSIGKEIT**
DOUBLE-WALLED VESSEL FOR STORING A POTABLE LIQUID
RÉCIPIENT À DOUBLE PAROI POUR LA CONSERVATION D'UN LIQUIDE BUVABLE

(30) Priorität: 03.05.2016 DE 102016108242
(43) Veröffentlichungstag der Anmeldung: 13.03.2019
(73) Patentinhaber: PI-Design AG, 6234 Triengen (CH)
(72) Erfinder: BODUM, Joergen, 6045 Meggen (CH)
(74) Vertreter: Westphal, Mussgnug & Partner Patentanwälte mbB
(86) Internationale Anmeldenummer: PCT/EP2017/060529
(87) Internationale Veröffentlichungsnummer: WO 2017/191185

(56) Entgegenhaltungen:
- JP-A- 2009 137 607
- KR-U- 20120 002 101
- US-A- 2 818 990
- US-A- 3 337 073
- US-A- 4 560 075

## Beschreibung

Die vorliegende Erfindung betrifft ein doppelwandiges Gefäß zum Aufbewahren einer trinkbaren Flüssigkeit.

Doppelwandige Gefäße werden insbesondere aus folgenden Gründen häufig zum Aufbewahren von trinkbaren Flüssigkeiten eingesetzt: Einerseits kann eine gegenüber einwandigen Gefäßen erhöhte Isolierung bereitgestellt werden, so dass Heißgetränke länger heiß und Kaltgetränke länger kalt bleiben. Andererseits ist das Ergreifen der doppelwandigen Gefäße für den Benutzer angenehmer, da sich die Temperatur der Getränke nur in vergleichsweise geringem Umfang auf die Hand des Benutzers überträgt, so dass er das Gefäß ergreifen kann, ohne sich seine Hand zu verbrennen oder sich zu verkühlen. Aufgrund letzterer Eigenschaft werden doppelwandige Gefäße häufig auch als Trinkgefäße ausgeführt, die so ausgeführt sind, dass die Heiß- und Kaltgetränke nicht nur aufbewahrt, sondern auch direkt getrunken werden können.

Ein derartiges doppelwandiges Trinkgefäß ist beispielsweise aus der DE 10 2013 114 552 A1 bekannt, bei dem ein im Wesentlichen hohlzylindrischer äußerer Behälter auf einen ebenfalls im Wesentlichen hohlzylindrischen inneren Behälter geschoben werden kann. Der äußere Behälter weist ein elastisches Verbindungsstück auf, welches in eine Einbuchtung des inneren Behälters eingreift, um den äußeren Behälter im Wesentlichen formschlüssig am inneren Behälter zu befestigen. Das Aufschieben und Befestigen gelingt aber nur, wenn der innere Behälter eine bestimmte Form aufweist, beispielsweise eine im Wesentlichen hohlzylindrische oder eine sich vom Boden des inneren Behälters erweiternde kegelige Form. Die DE 18 50 137 U zeigt ein doppelwandiges Gefäß mit einem inneren Behälter und einem äußeren. Der äußere Behälter weist zwei Teile auf, von welchem ein Teil als Schraubkappe ausgeführt und auf den anderen Teil aufgeschraubt werden kann.

Auch die DE 453 809 A zeigt ein doppelwandiges Gefäß mit einem inneren und einem äußeren Behälter. Konkret handelt es sich beim inneren Behälter um eine Teekanne, die mit dem äußeren Behälter isoliert werden kann. Der äußere Behälter weist zwei Teile auf, die voneinander getrennt werden können, um die Teekanne vom äußeren Behälter zu trennen.

Weitere doppelwandige Gefäße sind in der DE 718 821 A, der DE 10 2008 012 296 U1, der US 2 818 990 A, der US 4 560 075 A, der KR 2012 000 2101 U, der US 3 337 073 A und der JP 2009 137 607 A offenbart.

Aufgabe einer Ausführungsform der vorliegenden Erfindung ist es, ein doppelwandiges Gefäß zum Aufbewahren einer trinkbaren Flüssigkeit, insbesondere eines Heißgetränks wie Kaffee, mit einem inneren Behälter und einem äußeren Behälter anzugeben, bei welcher der äußere Behälter weitgehend unabhängig von der Form des inneren Behälters an diesem befestigt werden kann.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein doppelwandiges Gefäß zum Aufbewahren einer trinkbaren Flüssigkeit, insbesondere eines Heißgetränks wie Kaffee, umfassend einen inneren Behälter, der einen Hohlraum zum Aufnehmen der Flüssigkeit umschließt und zumindest eine Auflagefläche bildet, und einen äußeren Behälter, der zumindest zwei miteinander lösbar verbindbare Schalen umfasst, wobei der äußere Behälter im verbundenen Zustand den inneren Behälter zumindest teilweise umschließt und sich im verbundenen Zustand auf der Auflagefläche abstützt.

Im Rahmen dieser Beschreibung sollen unter Schalen flächige, gekrümmte und/oder gewölbte Körper verstanden werden. Dadurch, dass der äußere Behälter mindestens zwei miteinander lösbar verbindbare Schalen umfasst, ist es möglich, den inneren Behälter als gewölbten Körper, beispielsweise kugelförmig, auszugestalten, was beispielsweise beim in der DE 10 2013 114 552 A1 gezeigten Trinkgefäß nicht oder nur sehr bedingt möglich ist. Der äußere Behälter kann dabei eine Form aufweisen, die der Form des inneren Behälters mehr oder weniger entspricht. Prinzipiell kann jedoch die Form des inneren Behälters weitgehend unabhängig von der Form des äußeren Behälters gewählt werden. Um jedoch die Position des äußeren Behälters relativ zum inneren Behälter im verbundenen Zustand des äußeren Behälters zu definieren, stützt sich der äußere Behälter im verbundenen Zustand auf der Auflagefläche ab, welche vom inneren Behälter und insbesondere von dessen Stirnfläche oder äußeren Oberfläche gebildet wird. Dabei kann es im streng mathematischen Sinne auch zu einer Linienberührung kommen, so dass keine Fläche vorhanden wäre. In der Praxis wird aber immer eine Auflagefläche vorhanden sein. Innerhalb der Auflagefläche kommt der äußere Behälter im verbundenen Zustand mit dem inneren Behälter zur Anlage, so dass hierdurch eine Positionierung des äußeren Behälters erfolgt. Der äußere Behälter kann folglich nicht mehr beliebig relativ zum inneren Behälter bewegt werden, was die Benutzung des doppelwandigen Gefäßes deutlich erleichtert.

Dadurch, dass die Schalen lösbar miteinander verbindbar sind, können sie einfach vom ersten Behälter gelöst werden, beispielsweise zu Reinigungszwecken. Nach Abschluss der Reinigung können die Schalen wieder mit wenigen Handgriffen mit dem inneren Behälter verbunden werden. Aufgrund der einfachen Lösbarkeit des äußeren Behälters vom inneren Behälter wird eine gründliche Reinigung ermöglicht, insbesondere der kompletten äußeren Oberfläche des inneren Behälters und der Innenflächen der Schalen. Insbesondere ist es möglich, die zumindest zwei Schalen so auszugestalten, dass sie mittels eines Reibschlusses miteinander verbindbar sind. Weitere Bauteile zum Verbinden der Schalen miteinander sind in diesem Fall nicht mehr notwendig. Hierzu können die beiden Schalen zueinander korrespondierende Vorsprünge und Ausnehmungen umfassen, welche ein leichtes Übermaß zueinander aufweisen. Wenn die Vorsprünge in die Ausnehmungen eingebracht werden, entsteht ein Reibschluss, welcher die Schalen miteinander verbindet.

Erfindungsgemäß ist vorgesehen, dass der äußere Behälter eine Fixiervorrichtung zum Fixieren der zumindest zwei Schalen im verbundenen Zustand aufweist. Die Fixiervorrichtung kann beispielsweise einen Verschlusshebel aufweisen, mit welchem die Schalen miteinander verbunden werden. Hierdurch können die Schalen auf zuverlässige Weise miteinander verbunden und wieder voneinander gelöst werden. Ein unkontrolliertes Lösen der Schalen voneinander wird verhindert.

Erfindungsgemäß weist die Fixiervorrichtung eine Rastverbindung zum lösbaren Verbinden der zumindest zwei Schalen auf. Die Rastverbindung ist einfach zu fertigen, zuverlässig und für den Benutzer einfach im Umgang. Der Benutzer muss die beiden Schalen nur um den äußeren Behälter herum anordnen und gegeneinander drücken, wodurch die beiden Schalen miteinander verbunden werden. Beim Lösen muss entsprechend umgekehrt verfahren werden.

Nach Maßgabe einer weiteren Ausführungsform definiert der innere Behälter eine Längsachse und die Auflagefläche wird von einem zur Längsachse geneigten Abschnitt des inneren Behälters gebildet. Wie bereits oben erwähnt, kann der innere Behälter kugelförmig ausgestaltet sein, so dass er ohnehin einen geneigten Abschnitt in Bezug zur Längsachse aufweist. Die Auflagefläche wird folglich von der äußeren Oberfläche des inneren Behälters gebildet, die beispielsweise konvex oder konkav gewölbt oder eben sein kann. Es ist nicht notwendig, besondere Maßnahmen zur Bereitstellung der Auflagefläche zu ergreifen. Vielmehr können der äußere Behälter und insbesondere die verbindbaren Schalen so gestaltet werden, dass auch handelsübliche innere Behälter verwendet werden können. Insofern ist es möglich, bereits bestehende innere Behälter mit dem äußeren Behälter nachzurüsten. Besondere Maßnahmen oder Änderungen am inneren Behälter sind hierzu nicht notwendig, so dass die Nachrüstung auf relativ einfache Weise umgesetzt werden kann.

In einer weitergebildeten Ausführungsform kann der innere Behälter eine Öffnung zum Einfüllen der Flüssigkeit in den Hohlraum und zum Ausgießen der Flüssigkeit aus dem Hohlraum aufweisen, wobei ausgehend von der Öffnung und in Bezug auf die Längsachse der innere Behälter einen sich erweiternden Abschnitt aufweist, auf dem die Auflagefläche angeordnet ist. Handelsübliche innere Behälter, die zum Aufbewahren einer denkbaren Flüssigkeit verwendet werden, weisen üblicherweise einen sich erweiternden, konvex gewölbten Abschnitt, häufig kugelförmig oder kugelsegmentförmig, auf, wie es insbesondere bei Tee- und Kaffeekannen der Fall ist. Insofern ist es zum Bereitstellen des vorschlagsgemäßen Gefäßes nicht notwendig, den inneren Behälter mit einer vom üblichen Formenschatz abweichenden Form zu versehen. Die Umsetzung des vorschlagsgemäßen doppelwandigen Trinkgefäßes ist somit besonders einfach.

Bei einer weitergebildeten Ausführungsform kann der sich erweiternde Abschnitt ein Teil eines konvex gewölbten Abschnitts des inneren Behälters sein oder in den konvex gewölbten Abschnitt übergehen. Auch in dieser Ausführungsform drückt sich der vorschlagsgemäße Gedanke aus, nicht auf eine bestimmte Form des inneren Behälters angewiesen zu sein, solange ein sich erweiternde Abschnitt vorhanden ist. Da aber, wie bereits zuvor angedeutet, bei Gefäßen zur Aufbewahrung von Getränken üblicherweise innere Behälter verwendet werden, die zumindest teilweise konvex gewölbt sind, können diese ohne weitergehende konstruktive Änderungen mit dem vorschlagsgemäßen äußeren Behälter verwendet werden.

Bei einer weiteren Ausführungsform kann ausgehend von der Öffnung und in Bezug auf die Längsachse der innere Behälter einen sich verjüngenden Abschnitt aufweisen, an dem sich der erweiternde Abschnitt anschließt. Der sich verjüngende Abschnitt kann beispielsweise kegelförmig ausgeführt werden, so dass sich der sich verjüngende Abschnitt insbesondere zur Aufnahme eines Kaffeefilters eignet. Hierdurch ist es nicht notwendig, einen separaten Aufsatz für einen Kaffeefilter zu verwenden, was insbesondere den Vorteil hat, dass der Aufsatz nicht separat angeschafft werden muss und auch nicht verloren gehen kann. Im Bereich des Übergangs vom sich verjüngenden Abschnitt in den sich erweiternden Abschnitt bildet der innere Behälter eine Einschnürung.

Eine weitergebildete Ausführungsform zeichnet sich dadurch aus, dass der innere Behälter zumindest eine Anlagefläche bildet, mit welcher der äußere Behälter im verbundenen Zustand zur Anlage kommt. Für die Anlagefläche gilt ebenfalls, dass diese im streng mathematischen Sinne eine Linie sein kann, die sich in Realität jedoch als Fläche ausbildet. Wenn also der innere Behälter sowohl die Anlagefläche als auch die Auflagefläche bildet, die räumlich voneinander getrennt sind, tritt der äußere Behälter im verbundenen Zustand an zwei Flächen mit dem inneren Behälter in Kontakt. Insofern wird hierdurch die Positionierung des äußeren Behälters in Bezug auf den inneren Behälter klar definiert. Dies gilt insbesondere dann, wenn die Anlagefläche vom sich verjüngenden Abschnitt und die Auflagefläche vom sich erweiternden Abschnitt des inneren Behälters gebildet wird, wodurch die Auflagefläche und die Anlagefläche auf gegenüberliegenden Seiten der Einschnürung liegen und entgegengesetzt zueinander geneigt sind. Folglich kann der äußere Behälter entlang der Längsachse relativ zum inneren Behälter nicht mehr oder nur im Rahmen der Toleranzen verschoben werden.

Nach Maßgabe einer weiteren Ausführungsform weist der äußere Behälter eine erste Dichtung auf, mit welcher sich der äußere Behälter auf der Auflagefläche abstützt. Dabei kann die erste Dichtung ein elastisches Dichtelement umfassen, welches den inneren Behälter vor Beschädigungen durch den Kontakt mit dem äußeren Behälter schützt. Insbesondere werden Kratzer vermieden. Aufgrund der Elastizität des Dichtelements kann der äußere Behälter so ausgeführt werden, dass das Dichtelement im verbundenen Zustand etwas gepresst und damit vorgespannt wird. Hierdurch wird der äußere Behälter gegen die Anlagefläche gedrückt, so dass der äußere Behälter in Bezug auf den inneren Behälter eindeutig positioniert wird, ohne dass besonders strenge Toleranzen zu beachten sind.

Eine weitere Ausführungsform ist dadurch gekennzeichnet, dass der äußere Behälter im verbundenen Zustand den inneren Behälter so umgibt, dass ein Zwischenraum zwischen dem inneren Behälter und dem äußeren Behälter gebildet wird. Das Vorsehen eines Zwischenraums zwischen dem äußeren und dem inneren Behälter hat folgende Effekte: Weder der äußere noch der innere Behälter müssen mit besonderen Toleranzen versehen werden, da Abweichungen mittels des Zwischenraums ausgeglichen werden können. Weiterhin dient der Zwischenraum als zusätzliche Isolierung, da sich die Luft im Zwischenraum in nur relativ geringem Umfang mit der Umgebung austauschen kann und stehende Luft ebenfalls isolierend wirkt.

In einer weiteren Ausführungsform kann die erste Dichtung den Zwischenraum abdichten. In dieser Ausführungsform dichtet die erste Dichtung den Zwischenraum derart ab, dass der Austausch der Luft, die sich im Zwischenraum befindet, mit der Umgebung weiter verringert und somit die isolierende Wirkung erhöht wird. Weiterhin wird verhindert, dass die trinkbare Flüssigkeit im Falle eines Verschüttens oder Tropfens in den Zwischenraum läuft.

Bei einer weiteren Ausführungsform weist der äußere Behälter eine zweite Dichtung auf, welche die zumindest zwei Schalen im verbundenen Zustand zueinander abdichtet. Der äußere Behälter definiert eine Längsachse. Die zweite Dichtung kann dabei teilweise oder vollständig in einer Ebene liegen, die durch die Längsachse verläuft. Auch hierdurch wird die isolierende Wirkung des äußeren Behälters erhöht, da die Luft im Zwischenraum nicht über die Kontaktflächen, an denen die beiden Schalen im verbundenen Zustand aneinander anliegen, entweichen kann, solange die zweite Dichtung voll funktionsfähig ist.

Eine weitergebildete Ausführungsform ist dadurch gekennzeichnet, dass die Fixiervorrichtung ein elastisches Band umfasst, welches mit den zumindest zwei Schalen verbindbar ist. Das elastische Band ist einfach in der Herstellung und im Gebrauch und kann zudem auf einfache und kostengünstige Weise für den Fall ersetzt werden, dass es reißt oder aus anderen Gründen nicht mehr funktionstüchtig ist. Das elastische Band kann beispielsweise einmal um die Schalen herumgeführt und mittels eines Klettverschlusses fixiert werden. Alternativ oder kumulativ können Pins verwendet werden, die in entsprechend dimensionierte Durchbrüche des elastischen Bands eingreifen, um das elastische Band zu fixieren.

Nach Maßgabe einer weiteren Ausführungsform bestehen der innere Behälter aus Glas und der äußere Behälter aus Kunststoff. Aufgrund des inerten Charakters von Glas eignet es sich zum Aufbewahren von trinkbaren Flüssigkeiten besonders gut, da nahezu vollständig ausgeschlossen werden kann, dass Substanzen vom Glas in die trinkbare Flüssigkeit migrieren, die den Geschmack oder die Bekömmlichkeit der trinkbaren Flüssigkeit negativ beeinflussen könnten. Da Glas gut zu reinigen ist, wird zudem verhindert, dass sich Reste der trinkbaren Flüssigkeit im inneren Behälter dauerhaft festsetzen. Allerdings sind spezielle Formgebungen, beispielsweise zur Ausbildung der Rastverbindung, mit Glas nur mit einem erheblichen Aufwand zu fertigen, wobei auch die Einhaltung von Toleranzen bei der Verwendung von Glas besondere Schwierigkeiten macht. Hierzu eignet sich die Verwendung von Kunststoff als Material für den äußeren Behälter und insbesondere für die Bereitstellung der Schalen in besonderem Maße. So stellt beispielsweise das Vorsehen von Nuten zur Aufnahme von Dichtungen bei der Verwendung von Kunststoff kein besonderes Problem dar. Auch komplexere Formen können mit Kunststoff auf relativ einfache Weise erzeugt werden, was mit Glas nahezu ausgeschlossen ist. Insofern können die Vorzüge des Glases für die Aufbewahrung des Getränks mit der guten Formgebung des Kunststoffes für die Bereitstellung des doppelwandigen Gefäßes kombiniert werden. Für das Glas kann beispielsweise Borosilikatglas oder Kalk-Natronglas (Sodaglas) verwendet werden. Sich eignende Kunststoffe sind Styrol-Acrylnitril (SAN) oder Tritan-Copolyester.

Beispielhafte Ausführungsformen der Erfindung werden im Folgenden unter Bezugnahme auf die beigefügten Zeichnungen näher erläutert. Es zeigen
Fig. 1a) eine Schnittdarstellung durch ein Ausführungsbeispiel eines erfindungsgemäßen doppelwandigen Gefäßes,
Fig. 1b) eine vergrößerte Darstellung des in Figur 1a) gekennzeichneten Ausschnitts X,
Fig. 1c) eine vergrößerte Darstellung des in Figur 1a) gekennzeichneten Ausschnitts W,
Fig. 2a) eine Seitenansicht des Ausführungsbeispiels des erfindungsgemäßen doppelwandigen Gefäßes,
Fig. 2b) eine Schnittdarstellung entlang der in Figur 2a) definierten Schnittebene B-B,
Fig. 2c) eine vergrößerte Darstellung des in Figur 2b) gekennzeichneten Ausschnitts Z,
Fig. 3a) eine Schnittdarstellung entlang der in Figur 2a) definierten Schnittebene C-C, und
Fig. 3b) eine Schnittdarstellung des elastischen Bands.

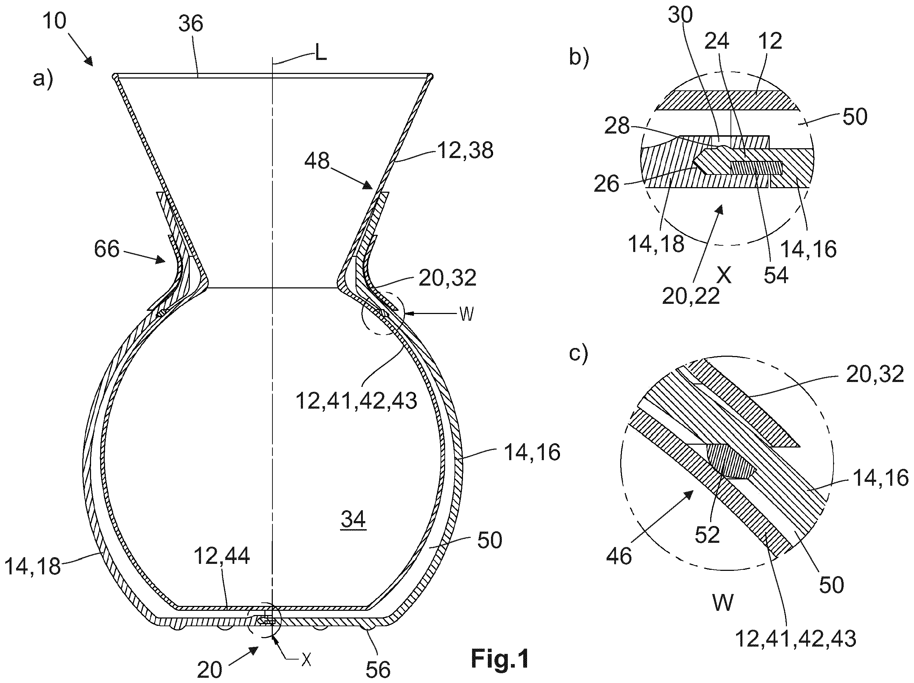

In Figur 1a) ist ein Ausführungsbeispiel eines erfindungsgemäßen doppelwandigen Gefäßes 10 anhand einer Schnittdarstellung gezeigt. Das Gefäß 10 weist einen inneren Behälter 12 und einen äußeren Behälter 14 auf. Der innere Behälter 12 ist im dargestellten Ausführungsbeispiel aus Glas, während der äußere Behälter 14 aus Kunststoff gefertigt ist. Der äußere Behälter 14 umfasst im dargestellten Ausführungsbeispiel eine erste Schale 16 und eine zweite Schale 18, die lösbar miteinander verbindbar sind. Hierzu weist das doppelwandige Gefäß 10 eine Fixiervorrichtung 20 auf, in die eine Rastverbindung 22 umfasst. Wie insbesondere aus Figur 1b) erkennbar, weist die erste Schale 16 einen Vorsprung 24 auf, der in eine entsprechend geformte Ausnehmung 26 der zweiten Schale 18 eingreift. Darüber hinaus weist der Vorsprung 24 eine Erhebung 28 auf, welche in eine Bohrung 30 oder Nut der Ausnehmung 26 eingreift, wodurch ein Formschluss erzeugt wird.

Weiterhin umfasst die Fixiervorrichtung 20 ein elastisches Band 32, welches im verbundenen Zustand der ersten und der zweiten Schale 16, 18 um diese herumgeführt und mit diesen befestigt werden kann, worauf im Folgenden noch näher eingegangen wird.

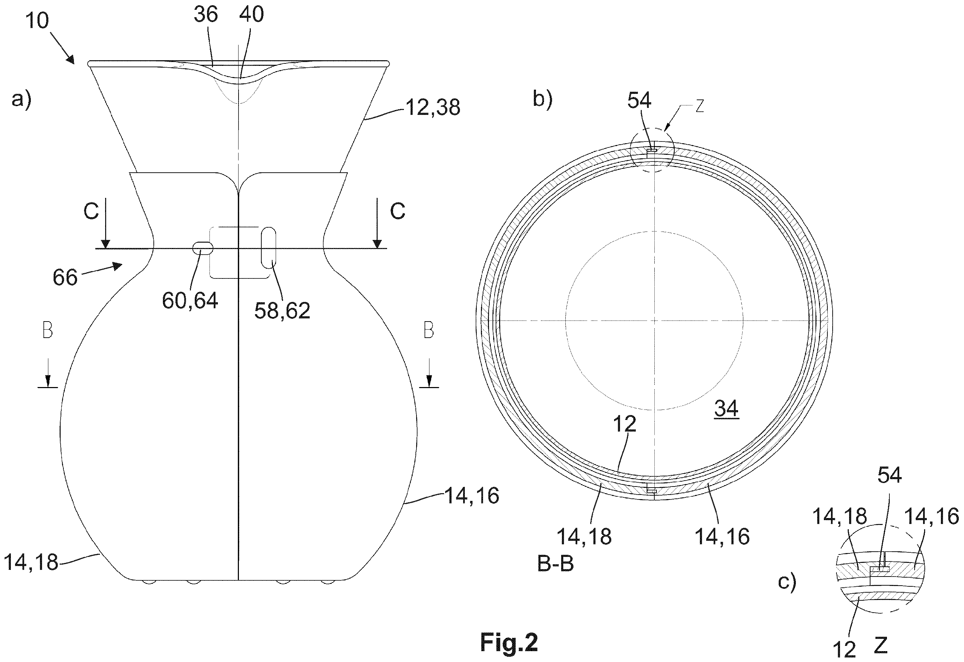

Der innere Behälter 12 umschließt einen Hohlraum 34, der eine Längsachse L definiert und in welchen über eine Öffnung 36 eine trinkbare Flüssigkeit, beispielsweise Kaffee oder Tee, in den Hohlraum 34 eingebracht und aus diesem wieder ausgegossen werden kann. Der innere Behälter 12 weist ausgehend von der Öffnung 36 und entlang der Längsachse L gesehen einen sich verjüngenden Abschnitt 38 auf, der im dargestellten Ausführungsbeispiel kegelig geformt ist. Der sich verjüngende Abschnitt 38 bildet im Bereich der Öffnung 36 eine Ausgussrinne 40, mit welcher die trinkbare Flüssigkeit kontrolliert beispielsweise in eine Tasse überführt werden kann (siehe Figur 2b)). Zudem dient der sich verjüngende Abschnitt der Aufnahme eines Kaffeefilters, so dass der Kaffee direkt mit dem doppelwandigen Gefäß zubereitet werden kann.

Dem sich verjüngenden Abschnitt 38 schließt sich ein sich erweiternder Abschnitt 42 an, der konvex gewölbt ist und somit einen konvex gewölbten Abschnitt 41 bildet. Aufgrund der konvexen Wölbung wird ein in Bezug auf die Längsachse L geneigter Abschnitt 43 gebildet. Ab einem gewissen Punkt nimmt der Durchmesser des sich erweiternden Abschnitts 42 nicht mehr zu, sondern vermindert sich wieder und geht in einen ebenen Bodenbereich 44 über, so dass der innere Behälter 12 neben dem kegeligen Abschnitt auch annäherungsweise einen kugelförmigen oder kugelsegmentförmigen Abschnitt aufweist. Auf der äußeren Oberfläche bildet der innere Behälter 12 auf dem sich erweiternden Abschnitt 42 eine Auflagefläche 46 (siehe Figur 1c)), auf welcher sich der äußere Behälter 14 im verbundenen Zustand abstützt. Darüber hinaus bildet der innere Behälter 12 auf seinem sich verjüngenden Abschnitt 38 eine Anlagefläche 48, an welcher der äußere Behälter 14 im verbundenen Zustand mit dem inneren Behälter 12 in Kontakt tritt. Dabei sind die Anlagefläche 48 und die Auflagefläche 46 so angeordnet und ausgerichtet, dass sie die Position des äußeren Behälters 14 relativ zum inneren Behälter 12 eindeutig festlegen. Wenn der äußere Behälter 14 im verbundenen Zustand den inneren Behälter 12 umgreift, kann er sich relativ zum inneren Behälter 12 nicht mehr verschieben.

Die Form des äußeren Behälters 14 entspricht in etwa der Form des inneren Behälters 12, so dass auch der äußere Behälter 14 einen kegelförmigen Abschnitt und einen kugelförmigen Abschnitt aufweist.

Wie insbesondere aus Figur 1a) hervorgeht, wird ein Zwischenraum 50 zwischen dem inneren und den äußeren Behälter 12, 14 gebildet, wenn der äußere Behälter 14 im geschlossenen Zustand den inneren Behälter 12 wie dargestellt umschließt. Aus der Figur 1c) geht hervor, dass der äußere Behälter 14 eine erste Dichtung 52 aufweist, mit welcher der äußere Behälter 14 im Bereich der Auflagefläche 46 mit dem inneren Behälter 12 in Kontakt tritt. Aus Figur 1b) ist zu erkennen, dass der äußere Behälter 14 weiterhin eine zweite Dichtung 54 aufweist, mit welcher die erste Schale 16 gegenüber der zweiten Schale 18 abgedichtet wird. Die zweite Dichtung 54 ragt über ihre gesamte Länge in eine Ebene hinein, welche entlang der Längsachse L verläuft. Hierdurch wird erreicht, dass die Luft, die sich im von der ersten Dichtung 52 abgedichteten Teil des Zwischenraums 50 befindet, nicht in die Umgebung entweichen kann, solange die erste Dichtung 52 voll funktionsfähig ist. Hierdurch wird eine besonders effektive Isolierung des ersten Behälters 12 erreicht, so dass sich die Temperatur des Getränks, welches im Hohlraum 34 des ersten Behälters 12 aufbewahrt wird, nur sehr langsam der Temperatur der Umgebung anpasst.

Am Boden weist der äußere Behälter 14 eine Anzahl von Füßen 56 auf, mit welchen das Gefäß 10 sicher auf einer Unterlage abgestellt werden kann.

In Figur 2a) ist eine Seitenansicht auf das in Figur 1 gezeigte Ausführungsbeispiel des doppelwandigen Gefäßes 10 gezeigt.

Man erkennt, dass die erste Schale 16 einen ersten Pin 58 und die zweite Schale 18 einen zweiten Pin 60 aufweisen, wobei der erste Pin 58 einen ersten Pinabschnitt 62 aufweist, der sich bezogen auf die in Figur 2a) gewählte Darstellung im Wesentlichen vertikal und der zweite Pin 60 einen zweiten Pinabschnitt 64 aufweist, der sich im Wesentlichen horizontal erstreckt. Die Pins 58, 60 sind in dem Bereich angeordnet, in welchem der kegelförmige Abschnitt in den kugelförmigen Abschnitt übergeht, wo sowohl der innere Behälter 12 als auch der äußere Behälter 14 eine Einschnürung 66 bilden.

Aus Figuren 2b) und 2c) ist erkennbar, dass die zweite Dichtung 54 nicht nur am Boden, wie in Figur 1b) dargestellt, sondern auch vertikal verläuft, so dass die zweite Dichtung 54 entlang der gesamten Kontaktfläche, an welcher die erste Schale 16 im verbundenen Zustand mit der zweiten Schale 18 in Kontakt tritt, verläuft.

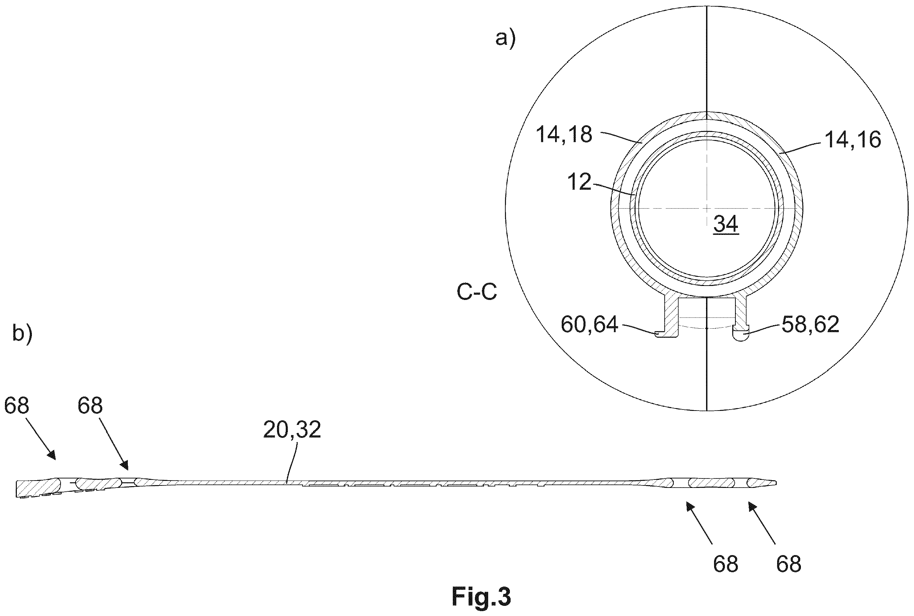

In Figur 3b) ist erkennbar, dass das elastische Band 32 an seinen beiden Enden jeweils zwei Durchbrüche 68 aufweist, welche auf den ersten Pin 58 und auf den zweiten Pin 60 aufsteckbar sind. Die Durchbrüche 68 sind so geformt, dass sie den in Figur 2a) dargestellten Orientierungen des ersten Pinabschnitts 62 und des zweiten Pinabschnitts 64 entsprechen. Hierdurch wird erreicht, dass das elastische Band 32 nur mit einer Ausrichtung auf die beiden Pins 62, 64 aufgesteckt werden kann.

Zum Verbinden der ersten Schale 16 mit der zweiten Schale 18 werden diese um den ersten Behälter 12 herum positioniert und aufeinander zu bewegt, bis dass der Vorsprung 24 der ersten Schale 16 formschlüssig in die Ausnehmung 26 der zweiten Schale 18 eingreift. Die Rastverbindung 22 kann dabei so ausgestaltet werden, dass der Benutzer eine eindeutige Rückmeldung erhält, wenn die beiden Schalen 16, 18 miteinander verbunden sind. Anschließend wird das elastische Band 32 mit einem Ende auf die beiden Pins 58, 60 gesteckt, einmal um die beiden Schalen geführt und anschließend mit dem anderen Ende auf die beiden Pins 58, 60 aufgeschoben. Somit sind die beiden Schalen 16, 18 nicht nur über ihre Rastverbindung 22, sondern auch über das elastische Band 32 miteinander verbunden.

Wie oben bereits erläutert, sind die Pins 58, 60 im Bereich angeordnet, in welchem der kegelförmige Abschnitt in den kugelförmigen Bereich übergeht. Wie bereits erörtert, bilden der innere Behälter 12 und der äußere Behälter 14 in diesem Bereich die Einschnürung 66. Aufgrund der Anordnung der Pins 58, 60 verläuft das elastische Band 32 entlang der Einschnürung 66 des äußeren Behälters 14, wodurch ein Verrutschen des elastischen Bands 32 vermieden wird. Das Verrutschen wird auch dadurch vermieden, dass das elastische Band 32 beim Herumführen um die beiden Schalen 16, 18 gespannt werden muss, da der Abstand zwischen den Durchbrüchen 68 kleiner ist als der Umfang der Einschnürung 66.

Zum Lösen des äußeren Behälters 14 vom inneren Behälter 12 wird das elastische Band 32 von den Pins 58, 60 und folglich vom äußeren Behälter 14 entfernt und die beiden Schalen 16, 18 auseinander gezogen. Das Lösen bietet sich insbesondere zum Reinigen des Gefäßes 10 an.

### Bezugszeichenliste

- 10: Gefäß
- 12: innerer Behälter
- 14: äußerer Behälter
- 16: erste Schale
- 18: zweite Schale

- 20: Fixiervorrichtung
- 22: Rastverbindung
- 24: Vorsprung
- 26: Ausnehmung
- 28: Erhebung

- 30: Bohrung
- 32: elastisches Band
- 34: Hohlraum
- 36: Öffnung
- 38: sich verjüngender Abschnitt

- 40: Ausgussrinne
- 41: konvex gewölbter Abschnitt
- 42: sich erweiternder Abschnitt
- 43: geneigter Abschnitt
- 44: Bodenbereich
- 46: Auflagefläche
- 48: Anlagefläche

- 50: Zwischenraum
- 52: erste Dichtung
- 54: zweite Dichtung
- 56: Füße
- 58: erster Pin
- 60: zweiter Pin
- 62: erster Pinabschnitt
- 64: zweiter Pinabschnitt
- 66: Einschnürung
- 68: Durchbruch

- L: Längsachse

## Patentansprüche

1. Doppelwandiges Gefäß zum Aufbewahren einer trinkbaren Flüssigkeit, insbesondere eines Heißgetränks wie Kaffee, umfassend
- einen inneren Behälter (12), der einen Hohlraum (34) zum Aufnehmen der Flüssigkeit umschließt und zumindest eine Auflagefläche (46) bildet, und
- einen äußeren Behälter (14), der zumindest zwei miteinander lösbar verbindbare Schalen (16, 18) umfasst, wobei der äußere Behälter (14) im verbundenen Zustand den inneren Behälter (12) zumindest teilweise umschließt und sich im verbundenen Zustand auf der Auflagefläche (46) abstützt,
**dadurch gekennzeichnet, dass** der äußere Behälter (14) eine Fixiervorrichtung (20) zum Fixieren der zumindest zwei Schalen (16, 18) im verbundenen Zustand aufweist, wobei die Fixiervorrichtung (20) eine Rastverbindung (22) zum lösbaren Verbinden der zumindest zwei Schalen (16, 18) aufweist.

2. Doppelwandiges Gefäß nach Anspruch 1,
**dadurch gekennzeichnet, dass** der innere Behälter (12) eine Längsachse (L) definiert und die Auflagefläche (46) von einem zur Längsachse (L) geneigten Abschnitt (43) des inneren Behälters (12) gebildet wird.

3. Doppelwandiges Gefäß nach Anspruch 2,
**dadurch gekennzeichnet, dass** der innere Behälter (12) eine Öffnung (36) zum Einfüllen der Flüssigkeit in den Hohlraum (34) und zum Ausgießen der Flüssigkeit aus dem Hohlraum (34) aufweist, wobei ausgehend von der Öffnung (36) und in Bezug auf die Längsachse (L) der innere Behälter (12) einen sich erweiternden Abschnitt (42) aufweist, auf dem die Auflagefläche (46) angeordnet ist.

4. Doppelwandiges Gefäß nach Anspruch 3,
**dadurch gekennzeichnet, dass** der sich erweiternde Abschnitt (42) ein Teil eines konvex gewölbten Abschnitts (41) des inneren Behälters (12) ist oder in den konvex gewölbten Abschnitt (41) übergeht.

5. Doppelwandiges Gefäß nach einem der Ansprüche 3 oder 4, **dadurch gekennzeichnet, dass** ausgehend von der Öffnung (36) und in Bezug auf die Längsachse (L) der innere Behälter (12) einen sich verjüngenden Abschnitt (38) aufweist, an dem sich der erweiternde Abschnitt (42) anschließt.

6. Doppelwandiges Gefäß nach einem der vorherigen Ansprüche, **dadurch gekennzeichnet, dass** der innere Behälter (12) zumindest eine Anlagefläche (48) bildet, mit welcher der äußere Behälter (14) im verbundenen Zustand zur Anlage kommt.

7. Doppelwandiges Gefäß nach einem der vorherigen Ansprüche, **dadurch gekennzeichnet, dass** der äußere Behälter (14) eine erste Dichtung (52) aufweist, mit welcher sich der äußere Behälter (14) auf der Auflagefläche (46) abstützt.

8. Doppelwandiges Gefäß nach einem der vorherigen Ansprüche, **dadurch gekennzeichnet, dass** der äußere Behälter (14) im verbundenen Zustand den inneren Behälter (12) so umgibt, dass ein Zwischenraum (50) zwischen dem inneren Behälter (12) und dem äußeren Behälter (14) gebildet wird.

9. Doppelwandiges Gefäß nach Anspruch 8, **dadurch gekennzeichnet, dass** die erste Dichtung (52) den Zwischenraum (50) abdichtet.

10. Doppelwandiges Gefäß nach einem der vorherigen Ansprüche, **dadurch gekennzeichnet, dass** der äußere Behälter (14) eine zweite Dichtung (54) aufweist, welche die zumindest zwei Schalen (16, 18) im verbundenen Zustand zueinander abdichtet.

11. Doppelwandiges Gefäß nach einem der vorherigen Ansprüche, **dadurch gekennzeichnet, dass** die Fixiervorrichtung (20) ein elastisches Band (32) umfasst, welches mit den zumindest zwei Schalen (16, 18) verbindbar ist.

12. Doppelwandiges Gefäß nach einem der vorherigen Ansprüche, **dadurch gekennzeichnet, dass** der innere Behälter (12) aus Glas und der äußere Behälter (14) aus Kunststoff bestehen.

## Claims

1. Double-walled receptacle for storing a potable liquid, in particular a hot drink such as coffee, comprising
- an inner container (12), that comprises a hollow chamber (34) for holding the liquid and at least one support surface (46), and
- an outer container (14) comprising at least two detachable and attachable shells (16, 18), wherein the outer container (14), in a connected state, at least partially encompasses the inner container (12) and, in the connected state, is supported on the support surface (46),
**characterized in that** the out container (14) comprises a fastening device (20) to fasten
the at least two shells (16, 18) in the connected state, wherein the fastening device (20)
has a snap-in connection for detachably connecting the at least two shells (16, 18).

2. Double-walled receptacle in accordance with claim 1, **characterized in that** the inner container (12) defines a longitudinal axis (L) and the support surface (46) is formed by a segment (43) of the inner container (12) that is inclined relative to the longitudinal axis (L).

3. Double-walled receptacle in accordance with claim 2, **characterized in that** the inner container (12) comprises an opening (36) for filling the liquid into the hollow chamber (34) and for pouring the liquid out of the hollow chamber (34), wherein the inner container (12) comprises a segment that widens (42) from the opening (36) and relative to the longitudinal axis (L) and on which the support surface (46) is disposed.

4. Double-walled receptacle in accordance with claim 3, **characterized in that** the widening segment (42) is a part of a convexly curved segment (41) of the inner container (12) or transitions into the convexly curved segment (41).

5. Double-walled receptacle in accordance with claim 3 or 4, **characterized in that** the inner container (12) comprises a segment that narrows ((38) from the opening (36) and relative to the longitudinal axis (L) and on which the widening segment (42) is attached.

6. Double-walled receptacle in accordance with any of the preceding claims,
**characterized in that** the inner container (12) forms at least one bearing surface (48) against which the outer container (14) rests in the connected state.

7. Double-walled receptacle in accordance with any of the preceding claims,
**characterized in that** the outer container (14) has a first seal (52) on which the outer container (14) is supported on the support surface (46).

8. Double-walled receptacle in accordance with any of the preceding claims,
**characterized in that** the outer container (14), in the connected state, encompasses the inner container (12) such that an intermediate chamber (50) between the inner container (12) and the outer container (14) is formed.

9. Double-walled receptacle in accordance with claim 8, **characterized in that** the first seal (52) seals the intermediate chamber (50).

10. Double-walled receptacle in accordance with any of the preceding claims,
**characterized in that** the outer container (14) has a second seal (54) which seals off the at least two shells (16, 18) to each other in the connected state.

11. Double-walled receptacle in accordance with any of the preceding claims,
**characterized in that** the fastening device (20) comprises an elastic band (32) that is attachable to the at least two shells (16, 18).

12. Double-walled receptacle in accordance with any of the preceding claims,
**characterized in that** the inner container (12) is made of glass and the outer container (14) is made of plastic.

## Revendications

1. Récipient à double paroi pour recevoir une boisson notamment une boisson chaude telle que du café, comprenant :
- un récipient intérieur (12) formant une cavité (34) pour recevoir la boisson et formant au moins une surface d'appui (46), et
- un récipient extérieur (14) composé d'au moins deux coques (16, 18) reliées de manière amovible, le récipient extérieur (14) à l'état relié entourant au moins partiellement le récipient intérieur (12) et s'appuyant à l'état assemblé, sur la surface d'appui (46),
récipient **caractérisé en ce que**
le récipient extérieur (14) comporte un dispositif de fixation (20) pour fixer au moins les deux coques (16, 18) à l'état relié, le dispositif de fixation (20) comportant une liaison par enclipsage (22) pour relier de manière amovible au moins les deux coques (16, 18).

2. Récipient à double paroi selon la revendication 1, **caractérisé en ce que**
le récipient intérieur (12) définit un axe longitudinal (L) et la surface d'appui (46) est formée par un segment (43) du récipient intérieur (12), incliné par rapport à l'axe longitudinal (L).

3. Récipient à double paroi selon la revendication 2, **caractérisé en ce que**
le récipient intérieur (12) a une ouverture (36) pour introduire la boisson dans la cavité (34) et pour verser la boisson de la cavité (34), et partant de l'ouverture (36), le récipient intérieur (12) a un segment évasé (42) par rapport à l'axe longitudinal (L), ce segment portant la surface d'appui (46).

4. Récipient à double paroi selon la revendication 3, **caractérisé en ce que**
le segment évasé (42) est une partie d'un segment (41) bombé, convexe, du récipient intérieur (12) ou rejoint le segment bombé de façon convexe (41).

5. Récipient à double paroi selon l'une des revendications 3 ou 4,
**caractérisé en ce que**
partant de l'ouverture (36), par rapport à l'axe longitudinal (L), le récipient intérieur (12) a un segment (38) allant en diminuant, et se poursuivant par le segment évasé (42).

6. Récipient à double paroi selon l'une des revendications précédentes,
**caractérisé en ce que**
le récipient intérieur (12) forme au moins une surface d'appui (48) sur laquelle, le récipient extérieur (14) vient en appui à l'état assemblé.

7. Récipient à double paroi selon l'une des revendications précédentes,
**caractérisé en ce que**
le récipient extérieur (14) a un premier joint (52) par lequel il s'appuie sur la surface d'appui (46).

8. Récipient à double paroi selon l'une des revendications précédentes,
**caractérisé en ce qu'**
à l'état assemblé le récipient extérieur (14) entoure le récipient intérieur (12) pour former un espace intermédiaire (50) entre le récipient intérieur (12) et le récipient extérieur (14).

9. Récipient à double paroi selon la revendication 8, **caractérisé en ce que**
le premier joint (52) ferme de manière étanche l'espace intermédiaire (50).

10. Récipient à double paroi selon l'une des revendications précédentes,
**caractérisé en ce que**
le récipient extérieur (14) comporte un double joint (54) qui assure l'étanchéité relative au moins des deux coques (16, 18) à l'état assemblé.

11. Récipient à double paroi selon l'une des revendications précédentes,
**caractérisé en ce que**
le dispositif de fixation (20) comprend un ruban élastique (32) qui relié au moins aux deux coques (16, 18).

12. Récipient à double paroi selon l'une revendications précédentes,
**caractérisé en ce que**
le récipient intérieur (12) est en verre et le récipient extérieur (14) en une matière plastique.
